# FASCICULE DE BREVET EUROPEEN

(11) **EP 1 448 711 B1**
(45) Date de publication et mention de la délivrance du brevet: **08.03.2006**
(21) Numéro de dépôt: 02788029.3
(22) Date de dépôt: 22.10.2002
(51) Int. Cl.: C08L 67/06, C08L 63/10

(54) **COMPOSITION THERMODURCISSABLE MOULABLE**
WÄRMEHÄRTENDE FORMMASSE
THERMOSETTING MOULDING COMPOSITION

(30) Priorité: 24.10.2001 FR 0113874
(43) Date de publication de la demande: 25.08.2004
(73) Titulaire: Arkema, 92800 Puteaux (FR); Mixt Composites Recyclables, 07302 Tournon/Rhone (FR)
(72) Inventeur: RAVIOLA, Florent, F-95490 Vaureal (FR); POGGI, Lorenzo, I-20135 Milan (IT); LANDRU, Lionel, 62300 Eleu dit Lawette (FR); TOURBEZ, Alain, F-07300 Tournon (FR); GAY, Jean-Louis, F-07300 Tournon (FR); MURARD, Pierre-Yves, F-26260 Saint Donat/Herbasse (FR)
(74) Mandataire: Hirsch & Associés
(86) Numéro de dépôt international: PCT/FR2002/003614
(87) Numéro de publication internationale: WO 2003/035754

(56) Documents cités:
- FR-A- 2 021 415

## Description

La présente invention concerne une composition thermodurcissable moulable, notamment à base de résine polyester insaturé, destinée, en particulier, à l'industrie automobile.

Les résines polyester insaturé classiques comprennent habituellement un polyester insaturé dilué dans un monomère à insaturation éthylénique (vinylique ou acrylique) pour ajuster la viscosité en fonction de l'application envisagée. Ce monomère sert de solvant du polyester et d'agent de réticulation. Lors de la réticulation (ou durcissement) du polyester et du monomère, on observe un retrait volumique. Ce retrait entraîne des craquelures, des défauts d'aspect et le gauchissement des pièces. On ajoute donc des agents compensateurs de retrait qui sont généralement des substances thermoplastiques. Introduits sous forme de poudre ou dilués dans le styrène, ces agents sont de nature polystyrène, polyéthylène, polychlorure de vinyle ou polyméthacrylate de méthyle conduisant à des retraits linéaires, après moulage, de 0,2% à 0,1% (low shrink), ou bien polyacétate de vinyle, polyester saturé, élastomères conduisant à des retraits proches de zéro (low profile). Que ces additifs compensateurs de retrait soient solubles ou non dans les résines avant réticulation, ils conduisent à une séparation de phase au moment de la réticulation. Les microdomaines formés génèrent un volume de vide compensant le retrait du polyester.

Les compositions thermodurcissables moulables trouvent, en particulier, une application dans des domaines où l'on souhaite obtenir des pièces moulées à surface parfaitement lisse, pouvant être revêtue par exemple d'une couche de peinture, de vernis ou d'une substance métallique ; c'est le cas, en particulier, des pièces pour automobiles, par exemple, des pièces pour la carrosserie et des réflecteurs pour dispositifs d'éclairage.

Des pièces de carrosserie pour véhicules automobiles sont fabriquées par moulage, par exemple par compression ou injection, de matériaux thermodurcissables du type BMC (Bulk Moulding Compound/Composé de moulage en masse) ou du type SMC (Sheet Moulding Compound/Produit de moulage en feuille) comprenant principalement une résine polyester insaturé, des charges minérales et des fibres de renforcement et au moins un agent compensateur de retrait, en particulier, du polyacétate de vinyle. Cet agent est particulièrement important pour les BMC ou les SMC destinés à former des pièces de carrosserie, car il est nécessaire d'obtenir, dans certains cas, un retrait nul ou pratiquement nul (low profile), et, dans d'autres cas, une légère expansion pour répondre aux exigences de la classe A du secteur automobile (par exemple obtention d'une surface parfaitement lisse sans retassures).

Ainsi, la demande de brevet japonais n° JP900407332 a trait à une composition comprenant une résine polyester insaturé, une résine thermoplastique tel que le polystyrène et de fines particules de poly(méthacrylate de méthyle) à raison de 0,005 à 5% par rapport à la résine polyester insaturé.

La demande de brevet français n° 2 021 415 propose un système résineux comprenant un polyester insaturé, un monomère à insaturation éthylénique et un polymère thermoplastique ayant une fonctionnalité acide.

La demande de brevet européen n° 454 517 a pour objet une composition moulable comprenant une résine polyester insaturé dans du styrène, des charges, des fibres de verre, un agent anti-retrait qui est le poly(méthacrylate de méthyle) dans du styrène et un agent de démoulage qui est un sel de calcium de l'acide montanique.

La demande de brevet japonais n°JP63069812 propose un matériau de moulage obtenu par mélange d'une résine polyester insaturé du type bisphénol hydrogéné, de styrène, d'un amorceur de réticulation qui est un carbonate de t-butyl peroxyisopropyle, d'un agent anti-retrait tel que le poly(méthacrylate de méthyle), d'une charge, d'un agent de renforcement, d'un agent de démoulage et d'un colorant.

La demande de brevet japonais n°JP06025539 se rapporte à des particules de résine colorées obtenues par dissolution d'une résine thermoplastique dans une résine polyester insaturé, ajout d'une charge, d'un pigment, d'un accélérateur de durcissement et d'un durcisseur radicalaire, durcissement du mélange et broyage pour obtenir les particules.

La demande de brevet japonais n°JP61057644 concerne une composition comprenant :
(A) une résine polyester insaturé ayant une masse moléculaire de 400 ou moins par double liaison, qui est obtenue par réaction d'un composé diacide qui est un diacide insaturé ou consiste en un diacide insaturé et un diacide saturé, avec un dérivé du glycol ;
(B) du poly(méthacrylate de méthyle) ou un copolymère à base de méthacrylate de méthyle, ayant une masse molaire moyenne en masse de 50 000 à 500 000 et une taille d'au plus 1 mm,
(C) une charge minérale contenant au moins 70% en poids d'hydroxyde d'aluminium, et
(D) un monomère éthylénique insaturé ;

dans laquelle le rapport massique du composé (A) au composé (B) est de 70/30 à 90/10, le rapport massique de la somme des composés (A) et (B) au composé (C) est de 10/90 à 35/65 et la quantité du composé (D) dans la composition est de 5% au plus.

Il est aussi connu de préparer des compositions thermodurcissables moulables, notamment à base de résine polyester insaturé, pour obtenir des articles moulés avec un retrait final pratiquement nul (appelé généralement « low profile » - entre 0 et 0,05% environ) ou une légère expansion, c'est-à-dire un accroissement dimensionnel de +0,02% à +0,09%, par exemple.

C'est le cas de la demande de brevet européen n° 751 184 qui est relative à des compositions thermodurcissables moulables et pigmentables utiles pour obtenir des articles moulés avec retrait nul ou faible expansion, comprenant, en poids :
de 15 à 45% de résine thermodurcissable, dilué dans un monomère à insaturation éthylénique,
de 0,1 à 1% de catalyseur,
de 3 à 15% de poudre de polymère (méth)acrylique d'une dimension inférieure à 150 *µ*m,
de 3 à 60% de charges minérales,
de 0 à 5% de pigments organiques ou minéraux,

jusqu'à 60% de fibres de renforcement.

La Demanderesse a constaté que les inconvénients des compositions thermodurcissables moulables connues sont principalement liés au fait que les matériaux, formés à partir de ces compositions, sont sujets à des pertes de masse, lors d'exposition à de hautes températures. De telles pertes de masse proviennent notamment de la libération de matières volatiles intervenant lorsqu'on soumet ces matériaux à de hautes températures.

L'émission de matière volatiles est gênante, d'une part, parce qu'elle provoque l'apparition de bulles dans le revêtement de surface (peinture, vernis) appliqué ultérieurement, et, d'autre part, parce que lors d'une utilisation ultérieure à température élevée, la qualité du revêtement est diminuée.

Aucune des solutions des documents de l'art antérieur ne résout de manière satisfaisante le problème posé par l'obtention d'une composition qui, d'une part, conduit à des articles moulés à retrait final pratiquement nul et, d'autre part, évite l'émission de matières volatiles lors de traitements thermiques ultérieurs.

L'invention a donc pour objet une composition thermodurcissable moulable, apportant une solution satisfaisante au problème qui vient d'être mentionnné.

Cette composition comprend :
- une résine polyester insaturé ou époxy vinylester (A) en solution dans un monomère liquide à insaturation éthylénique (B) ;
- au moins un additif anti-retrait (C) ;
- un catalyseur peroxyde organique, destiné à amorcer la réticulation de la résine (A),
- une charge minérale, notamment du type carbonate de calcium ;

et elle se caractérise en ce que :
- le monomère liquide à insaturation éthylénique (B) est un vinyltoluène et/ou un t-butyl styrène ; et
- le ou les additif(s) anti-retrait (C) est/sont dépourvu(s) de fonctionnalité acide et est/sont choisi(s) parmi les copolymères de méthacrylate de méthyle et d'un comonomère qui est un monomère vinylique et/ou de l'acrylate de méthyle et/ou de l'acrylate d'éthyle, en solution dans le monomère à insaturation éthylénique (B).

Une telle composition a donc l'avantage de pouvoir être homogène ou globalement homogène, en ce sens que ses constituants (y compris les charges telles que les fibres ou les billes de verre) peuvent être répartis de façon homogène.

La composition selon l'invention trouve des applications dans le domaine de l'industrie automobile. Elle permet, notamment, la réalisation de certains équipements d'une automobile, tels que, par exemple, des paraboles de phares, des couvres-culasse, ou encore des pipes d'admission .

Cependant, cette composition trouve également des applications dans d'autres domaines techniques, dans lesquels la tenue en température revêt une importance certaine. A cet égard, on peut citer, en particulier, le domaine de l'électricité, par exemple pour réaliser des interrupteurs, le domaine de l'électroménager, par exemple pour fabriquer des fours à micro-ondes ou des cafetières, ainsi que le domaine du bâtiment pour faire des pièces peintes.

Selon un mode de réalisation préféré de l'invention, la composition selon l'invention contient en outre un agent mouillant particulier qui présente l'avantage de ne pas exsuder à la surface des articles moulés.

Un deuxième objet de la présente invention est un procédé pour la préparation de la composition thermodurcissable moulable selon l'invention.

Un troisième objet de la présente invention est un objet rigide obtenu par réticulation d'une composition selon l'invention. Un tel objet peut donc être homogène.

Un quatrième objet de la présente invention est une solution de copolymère de méthacrylate de méthyle et de styrène dans le vinyltoluène et/ou le t-butylstyrène.

Un cinquième objet de la présente invention est une composition thermodurcissable comprenant une solution de copolymère de méthacrylate de méthyle et de styrène dans le vinyltoluène et/ou le t-butylstyrène.

Un cinquième objet de la présente invention est l'utilisation d'une telle solution dans une composition thermodurcissable.

D'autres caractéristiques et avantages de l'invention vont maintenant être décrits en détail dans l'exposé qui suit.

### EXPOSÉ DÉTAILLÉ DE L'INVENTION

Dans la composition thermodurcissable selon l'invention, la résine (A) peut être un époxy vinylester ou un polyester insaturé. Ce dernier est, comme il est bien connu, un polyester résultant de la polycondensation d'au moins un diacide insaturé ou son anhydride et d'au moins un diol. On peut citer notamment l'acide maléique et son anhydride et l'acide fumarique. De faibles quantités de diacides ou anhydrides aromatiques, cycloaliphatiques ou aliphatiques saturés peuvent être employées pour modifier les propriétés mécaniques et chimiques du produit final. Ainsi, on peut utiliser l'acide orthophtalique et son anhydride, l'acide isophtalique, l'acide adipique, l'anhydride tétrahydrophtalique. Pour des résines à résistance au feu améliorée, on peut utiliser des monomères halogénés comme l'anhydride tétrabromo- ou tétrachlorophtalique et l'acide hexachloroendométhylène tétrahydrophtalique. Les principaux diols généralement utilisés sont l'éthylène glycol, le propylène glycol, le diéthylène glycol, le dipropylène-glycol, le néopentyl glycol ou le 1,3-butanediol.

La résine thermodurcissable peut aussi être une résine époxy vinylester, qui est une résine époxy modifiée par un acide, en particulier, un acide (méth)acrylique.

Le monomère à insaturation éthylénique (B) sert notamment à diluer la résine thermodurcissable, pour obtenir la résine avec la viscosité nécessaire à l'application envisagée. Il sert aussi à former le réseau tridimensionnel lors de la réticulation. Selon la présente invention, il sert aussi à diluer l'additif anti-retrait (C).

Le monomère à insaturation éthylénique (B) est un vinyltoluène ou un t-butyl styrène. De préférence, le monomère (B) est le vinyltoluène.

Selon un mode de réalisation préféré de l'invention, la résine polyester ou l'époxy vinylester (A) est dilué(e) dans le monomère (B), à raison de 10 à 70% et de préférence de 20 à 65% en poids.

Ainsi, les pièces obtenues par réticulation de la composition selon l'invention sont beaucoup plus stables à 200 et 220°C.

La composition selon l'invention contient au moins un additif anti-retrait (C) choisi parmi les copolymères de méthacrylate de méthyle et d'un comonomère qui est un monomère vinylique et/ou de l'acrylate de méthyle et/ou de l'acrylate d'éthyle.

L'additif anti-retrait (C) est, de préférence, utilisé sous forme de solution dans le monomère (B) à raison de 10 à 55% en poids, en particulier de 20 à 45%.

Outre son effet anti-retrait, ce copolymère (C) aide aussi à l'homogénéisation et à la stabilisation de l'ensemble des constituants de la composition thermodurcissable par suite de l'augmentation de la viscosité liée probablement à l'absorption du monomère à insaturation éthylénique.

Comme monomère vinylique utilisable pour préparer le copolymère (C), on peut citer le styrène, l'α-méthylstyrène ou un vinyltoluène.

De préférence, le copolymère (C) est un copolymère de méthacrylate de méthyle et de styrène.

On utilise, en particulier, un copolymère (C) de méthacrylate de méthyle et de styrène contenant de 20 à 60% et de préférence de 40 à 50% en poids de styrène.

La masse molaire moyenne en masse du composé (C) est généralement comprise entre 50 000 et 500 000 g/mole.

La composition selon l'invention comprend également au moins une charge minérale qui peut être du carbonate de calcium, de l'hydroxyde d'aluminium, etc. Comme il est bien connu, la charge apporte des propriétés telles que des propriétés rhéologiques, une meilleure résistance au feu, des propriétés chimiques.

La quantité totale de charge minérale représente de 10 à 70% du poids de la composition thermodurcissable.

De préférence, on utilise comme charge du carbonate de calcium.

Selon un mode de réalisation préféré de l'invention, la composition thermodurcissable comprend en outre un agent mouillant (ou de mouillage). En effet, faire appel à un agent de mouillage est avantageux, dans la mesure où ce dernier n'est sensiblement pas sujet aux phénomères d'exsudation vers la surface de la pièce moulée, une fois cette dernière réalisée.

Un agent liquide de mouillage, qui est connu en tant que tel, est une combinaison organique, constituée de groupes polaire et non polaires, permettant de réduire la tension interfaciale dans les polyesters insaturés, renforcés et chargés. Un tel agent de mouillage est par exemple le produit vendu sous la dénomination commerciale BYK-W9050 par la société BYK.

L'agent de mouillage représente avantageusement de 0,5 à 1,5% du poids total de la composition thermodurcissable.

Dans la composition thermodurcissable moulable selon l'invention, cet agent de mouillage se substitue aux agents de démoulage de l'art antérieur, tels que le stéarate de calcium et le stéarate de zinc, qui donnent lieu au phénomène précité d'exsudation.

Ainsi, dans l'art antérieur faisant appel à ces 2 agents de démoulage, lorsque les pièces moulées sont par exemple dégraissées, puis rincées, ces différents traitements ne sont pas d'une efficacité satisfaisante, à cause de ce phénomène d'exsudation. Ceci induit donc un taux de rebut élevé des pièces, que l'invention permet de réduire sensiblement.

La composition thermodurcissable selon l'invention comprend en outre de 0,1% à 1% d'un catalyseur, pour provoquer la réticulation de la résine thermodurcissble. Comme catalyseur, on utilise généralement un peroxyde organique qui peut être, suivant la température de polymérisation, le peroxyde de ditertio-butyle, le peroctoate de tertio-butyle (TBPEH), le perbenzoate de tertio-butyle et le peroxyde de benzoyle.

La composition thermodurcissable selon l'invention peut aussi contenir divers additifs. On peut mentionner par exemple, un agent de mûrissement, tel qu'un oxyde ou un hydroxyde alcalino-terreux, en particulier l'oxyde de magnésium (magnésie).

On peut également mentionner des fibres de renforcement, généralement jusqu'à 60% du poids total de la composition. Ces fibres de renforcement sont choisies en général parmi les fibres de verre de longueur comprise entre 3 et 25 mm, les fibres de carbone ou d'aramide, telles que celles vendues sous la dénomination commerciale KEVLAR par la Société Dupont de Nemours.

La composition thermodurcissable selon l'invention peut aussi contenir des fibres végétales et/ou synthétiques, par exemple jusqu'à 45% en poids de la composition et, en particulier, de 5 à 35%. On peut ainsi employer des fibres de cellulose, comme décrit dans la demande de brevet français n° 2 704863, ce qui permet de diminuer la densité de la composition de sorte que les pièces moulées à partir de cette composition sont très allégées. Les fibres peuvent être de diverses origines, éventuellement d'éléments broyés de recyclage, par exemple des fibres cellulosiques comme des fibres de bois, de coton, etc. des fibres synthétiques (polypropylène, polytéréphtalate d'éthylène...) et de différentes longueurs (quelques microns à plusieurs millimètres).

La composition thermodurcissable selon l'invention peut aussi contenir des inhibiteurs, ajoutés à raison de 0,1% au plus, afin d'éviter la réticulation du polyester en cours de synthèse ou lors de la dilution avec le monomère à insaturation éthylénique (B). Comme inhibiteur, on peut citer l'hydroquinone, la benzoquinone et la parabenzoquinone. Elle peut aussi contenir tout composé permettant sa conservation avant emploi, par exemple un mélange d'Ionol et de styrène.

La composition thermodurcissable selon l'invention peut comprendre jusqu'à 10% en poids, et de préférence de 5 à 10% en poids, de microsphères de verre, en vue d'améliorer la réflexion optique, par exemple pour réaliser des réflecteurs pour dispositifs d'éclairage.

La composition thermodurcissable selon l'invention peut aussi contenir des pigments ou colorants organiques ou minéraux, comme du noir animal, de l'oxyde de fer, etc. Ces pigments ou colorants peuvent donc être répartis d'une manière homogène, ce qui conduit à des pièces moulées parfaitement pigmentées dans la masse. On peut donc utiliser ces pièces pour tout articles devant présenter une teinte homogène dans la masse, par exemple des articles éléctroménagers, des pièces automobiles, etc.

Du fait de la répartition homogène des pigments dans la composition selon l'invention, on peut obtenir, si ces pigments sont conducteurs, des pièces ayant une résistivité superficielle comprise entre 10³ et 10⁷ Ω/log₁₀ (mesurés suivant la norme NFC 26215). Avec un tel état de surface, les pièces peuvent être recouvertes d'une peinture par pistolage électrostatique sans nécessiter de dépôt d'une couche d'apprêt conductrice. Pour former des paraboloides (réflecteurs) pour phares de véhicules automobiles par exemple, le dépôt de la couche d'aluminium (aluminage) peut être fait directement sur la pièce moulée sans que soit nécessaire le traitement préalable usuel.

Les compositions pour former des pièces moulées ayant une résistivité superficielle comprise entre 10³ et 10⁷ Ω/log₁₀ comprennent de 1 à 4% de substances conductrices, notamment du noir de carbone.

Une composition préférée de l'invention comprend :
(A) de 8 à 30% de polyester insaturé du type maléique, ajouté sous forme de solution dans le vinyltoluène (B),
(C) de 4 à 15% d'un copolymère de méthacrylate de méthyle et de styrène ajouté sous forme de solution dans le vinyltoluène (B),
(D) de 30 à 70% de carbonate de calcium,
(E) de 0,2 à 1% d'un peroxyde organique,
(F) de 5 à 50% de fibres de renforcement, et
(G) de 0,6 à 1,2% d'agent de mouillage.

Les inventeurs ont également constaté avec surprise qu'il se produit un effet de synergie lorsqu'on utilise le copolymère (C) de méthacrylate de méthyle et de styrène, tel que décrit précédemment, en solution dans le vinyltoluène.

Une telle combinaison se conduit comme un excellent capteur ou piégeur de matières volatiles. De façon curieuse, cet effet ne se retrouve pas lorsque le copolymère (C) est en solution dans le styrène.

Un tel effet constitue donc un avantage décisif pour réduire les émissions de matières volatiles durant les opérations de moulage à 150°C et les opérations de vernissage, peinture, etc. à haute température (220°C).

### Préparation

La composition thermodurcissable selon l'invention peut être préparée en mettant en oeuvre du matériel classique tel qu'un malaxeur en bras en Z, un malaxeur DRAIS (mélangeur à socs à rotation centrale), un TMC ou AMC (machines du type calandreuse à 2 rouleaux), un SMC (Sheet Moulding Compound/Produit de moulage en feuille).

D'une manière générale, le procédé de préparation d'une composition thermodurcissable selon l'invention comprend :
- le cas échéant, une étape de réalisation d'un premier mélange de la charge minérale avec d'éventuels additifs,
- une étape de réalisation d'un second mélange des constituants (A), (B) et (C) et des éventuels autres constituants liquides ou solubles,
- une étape d'introduction de la charge minérale ou, le cas échéant du premier mélange, dans le second mélange.

Le copolymère (C) peut être mis en oeuvre sous la forme de perles que l'on dissout dans le monomère (B). Ces perles peuvent être obtenues par polymérisation en suspension aqueuse, par exemple, suivant le procédé décrit dans la demande de brevet européen n° 457 356 ou celui décrit dans la demande de brevet européen n° 683 182.

Les perles de copolymère (C) ont généralement une taille comprise entre 30 et 400 microns et de préférence entre 60 et 200 microns.

La composition selon l'invention peut ensuite être obtenue par différents procédés.

Le procédé préféré consiste à utiliser deux malaxeurs.

Un premier malaxeur à ruban permet de réaliser un mélange homogène des éléments solides, par exemple des différentes charges minérales, des fibres de verre et des éventuelles fibres de cellulose.

Un deuxième malaxeur à bras en Z sert dans un premier temps au mélange des éléments liquides (résines, catalyseurs, colorants...) et de la poudre du copolymère (C) en solution dans le monomère (B). Il sert ensuite à l'opération finale consistant à imprégner le mélange des éléments solides à l'aide du mélange liquide.

A titre d'exemple, le premier malaxeur à ruban a une capacité de 1200 litres et est chargé de 300 kg de matières solides. Ces matières y sont malaxées pendant une minute et demie à 42 tours/min.

Le deuxième malaxeur, à bras en Z, possède également une capacité de 1200 litres et fonctionne à 27 tours/min. Le malaxage des composants liquides dure environ 10 min et l'imprégnation des composants solides de 4 à 6 min selon le pourcentage de fibres de verre.

### Utilisations

La composition thermodurcissable selon l'invention est utilisable dans toutes sortes d'applications liées aux tenues thermiques, aux domaines de l'électricité pour les interrupteurs, de l'électroménager pour les fours à micro-ondes, les cafetières, les grille-pain, etc., du bâtiment pour les pièces peintes intérieures et extérieures, etc.

Les pièces obtenues par réticulation de la composition selon l'invention présentent un retrait dit « Low profile» (retrait de 0 à 0,05% environ) ou une légère expansion (de l'ordre de +0,05% à +0,09%), ce qui les rend utilisables notamment pour les pièces de carrosserie pour véhicules automobiles.

Les pièces moulées obtenues à partir de la composition selon l'invention présentent une surface très lisse, exempte de défauts, en particulier de retassures à l'endroit des bossages et des nervures de renfort.

En outre, ces pièces sont particulièrement intéressantes parce qu'elle ne produisent pas d'émissions trop importantes à hautes températures (220°C) durant les opérations de vernissage, de peinture, d'aluminage, de zingage, etc.

Elle sert donc avantageusement de composition thermodurcissable moulable du type BMC (Bulk Moulding Compound/Composé de moulage en masse), DMC (pâte mastic) ou SMC (Sheet Moulding Compound/Produit de moulage en feuille).

En outre, les pièces moulées obtenues à partir de la composition selon l'invention peuvent supporter en continu, pendant plusieurs milliers d'heures, une température de 150°C ou supérieure.

Ces pièces trouvent donc des applications comme paraboles de phares, éléments de carrosserie, de pièces sous capot moteur, etc.

### Exemples

Les exemples suivants illustrent la présente invention sans toutefois en limiter la portée.

### Exemple 1

On prépare la composition selon l'invention ayant la formulation suivante :
- 10,3% d'une solution à 60% en poids de résine polyester insaturé de type maléique dans du vinyltoluène ;
- 10,2% d'une solution à 40% en poids de poudre copolymère (*), dans du vinyltoluène ;
- 0,20% de catalyseur qui est du TBPEH (peroxyde organique);
- 0,0010% de parabenzoquinone (inhibiteur) ;
- 0,016% de mélange d'Ionol et de styrène, en proportions pondérales égales (conservateur);
- 0,60% de l'agent liquide de mouillage BYK-W9050 ;
- 66,68 % de carbonate de calcium ;
- 12,00% de fibres de verre de 6mm, de type E.

(*) : le copolymère était constitué de 60% en poids de méthacrylate de méthyle et de 40% en poids de styrène, sa masse molaire moyenne en masse était de 100 000 à 150 000 g/mole.

### Exemple 2 (témoin)

On prépare une composition selon l'art antérieur du type BMC, en remplaçant, dans la composition de l'Exemple 1, le copolymère méthacrylique (C) par un agent anti-retrait usuel, à savoir, le poly(acétate de vinyle) et le vinyltoluène par du styrène.

### Exemple 3

On fait réticuler un échantillon de 4 g de chacune des compositions des Exemples 1 et 2, puis on teste les échantillons réticulés en les maintenant à 200-220°C durant 80 000 minutes.

Les matières volatiles libérées sont analysées par chromatographie en phase gazeuse et spectrométrie de masse.

On identifie pour la composition de l'art antérieur réticulée les produit suivants :
3-méthyl heptane : 12,8%
1-octène : 13,7%
éthyl benzène : 16,7%
diméthyl benzène : 17,1%
styrène : 19%
benzaldéhyde : 20,7%

Testée à 220°C pendant 80000 minutes (55 jours), la composition de l'art antérieur réticulée perd 20% de sa masse et ses caractéristiques physiques et mécaniques se sont fortement détériorées.

On maintient également la composition selon l'invention réticulée à une température de 220°C pendant 80000 minutes.

Le tableau suivant permet de comparer les pertes en poids à 200°C et 220°C observées durant 80 000 minutes (55 jours) sur des plaques de 100*100*4 mm selon l'invention (Exemple 1) ou selon l'art antérieur (Exemple 2).

| Temps en minutes | BMC de l'art antérieur (Ex. 2) | | Composition selon l'invention (Ex. 1) | |
|---|---|---|---|---|
| | 200°C | 220°C | 200°C | 220°C |
| 5000 | 2% | 3% | 0, 60 % | 1,40% |
| 10 000 | 2,80% | 7% | 0,90% | 2% |
| 15 000 | 3,40% | 11% | 1,40% | 2,50% |
| 20 000 | 5,40% | 13% | 1,45% | 2,60% |
| 25 000 | 6,40% | 14% | 1,60% | 2,80% |
| 30 000 | 7,60% | 15% | 1,65% | 2,90% |
| 40 000 | 9,10% | 16,10% | 1,80% | 3% |
| 50 000 | 11,90% | 18% | 2% | 3,50% |
| 60 000 | 12,80% | 19% | 2,35% | 3,75% |
| 70 000 | 12,90% | 19,6% | 2,70% | 3,85% |
| 80 000 | 13,20% | 20% | 2,90% | 4% |

(On estime qu'à partir de 80 000 minutes, les matériaux sont stabilisés. Les différences de poids sont dûes à la reprise en humidité, phénomène normal sur ce type de matériaux lors du refroidissement des plaques.)

On constate que la perte en masse de la composition selon l'invention n'est que de 4%, ce qui correspond à environ 5 fois moins que la composition de l'art antérieur réticulée.

En outre, une bonne partie des propriétés mécaniques et physiques de la composition selon l'invention a été préservée.

Ainsi, il s'avère que l'utilisation du copolymère (C), combinée à l'emploi d'un vinyltoluène et/ou d'un t-butyl styrène permet de s'affranchir, dans une mesure sensible, des phénomènes de libération des matière volatiles mentionnées ci-dessus. En effet, dans ces conditions, le copolymère (C) se conduit comme un capteur de matières volatiles.

Par conséquent, l'usage de cette composition pour réaliser des pièces devant supporter des températures de 180°C en continu est parfaitement envisageable.

En particulier, cette tenue améliorée aux hautes températures est particulièrement avantageuse pour de nombreuses pièces destinées à l'industrie automobile :
- pièces de structure ou de carrosserie soumises à des températures élevées (environ 220°C) lors des opérations de mise en peinture (cataphorèse) ;
- pièces sous capot moteur tels que couvre-culasse et carters d'huile.

### Exemple 4

On a préparé des compositions comme à l'exemple 1, en utilisant à la place du copolymère (C), différents copolymères C1 et C2 dont les compositions exprimées en % massiques étaient les suivantes :
- C1 : 88% de méthacrylate de méthyle et 12% d'acrylate d'éthyle (masse molaire moyenne en masse : 70 000 à 80 000 g/mole)
- C2 : 50 % d'un copolymère constitué de 98% de méthacrylate de méthyle et 2% d'acrylate de méthyle (masse molaire moyenne en masse : 90 000 à 100 000 g/mole) et 50% d'un copolymère constitué de 96% de méthacrylate de méthyle et 4% d'acrylate d'éthyle (masse molaire moyenne en masse : 100 000 à 120 000 g/mole).

Puis, on a mesuré, comme indiqué à l'exemple 3, les pertes en poids, à 220°C, pendant 24 000 minutes, sur des plaques obtenues à partir des compositions contenant les copolymères C1 et C2.

Ces pertes en poids ont été évaluées respectivement à 6% et 6,5%.

### Exemple 5 (témoin)

On a opéré comme indiqué à l'exemple 1, mais en remplaçant le copolymère de méthacrylate de méthyle (60%) et de styrène (40%) par un copolymère de méthacrylate de méthyle (98%) et d'acrylate de méthyle (2%) en solution dans du styrène au lieu du vinyltoluène et on a utilisé 12,65% d'une solution à 40% de ce copolymère dans le styrène.

On a mesuré les pertes en poids, comme indiqué à l'exemple 3.

Les résultats sont les suivants :

| Temps en minutes | BMC de l'art antérieur -200°C |
|---|---|
| 5000 | 1,3% |
| 10 000 | 2,2% |
| 15 000 | 3,5% |
| 20 000 | 6,6% |
| 25 000 | 8,6% |
| 30 000 | 9,1% |
| 40 000 | 11,6% |
| 50 000 | 12,4% |
| 60 000 | 13,3% |
| 70 000 | 13,6% |
| 80 000 | 13,7% |

## Revendications

1. Composition thermodurcissable moulable comprenant :
- une résine polyester ou époxy vinylester (A) en solution dans un monomère liquide à insaturation éthylénique (B) ;
- au moins un additif anti-retrait (C) ;
- un catalyseur peroxyde organique ; et
- une charge minérale ;
**caractérisée en ce que** :
- le monomère liquide à insaturation éthylénique (B) est un vinyltoluène et/ou un t-butyl styrène ; et
- le ou les additif (s) anti-retrait (C) est/sont dépourvu(s) de fonctionnalité acide et est/sont choisi(s) parmi les copolymères de méthacrylate de méthyle et d'un comonomère qui est un monomère vinylique et/ou de l'acrylate de méthyle et/ou de l'acrylate d'éthyle, en solution dans le monomère à insaturation éthylénique (B).

2. Composition selon la revendication 1, **caractérisée en ce que** le monomère à insaturation éthylénique (B) est un vinyltoluène.

3. Composition selon la revendication 1 ou la revendication 2, **caractérisée en ce que** la résine polyester ou époxy vinylester (A) est en solution dans le vinyltoluène, à raison de 10 à 70% et de préférence de 20 à 65% en poids.

4. Composition selon l'une des revendications 1 à 3, **caractérisée en ce que** copolymère (C) est un copolymère de méthacrylate de méthyle et de styrène.

5. Composition selon la revendication 4, **caractérisée en ce que** le copolymère (C) est un copolymère de méthacrylate de méthyle et de styrène contenant de 20 à 60% et de préférence de 40 à 50% en poids de styrène.

6. Composition selon la revendication 4 ou la revendication 5, **caractérisé en ce que** le copolymère de méthacrylate de méthyle et de styrène présente une masse molaire moyenne en masse comprise entre 50 000 et 500 000 g/mole.

7. Composition selon l'une des revendications 1 à 6, **caractérisée en ce qu'**elle comprend en outre un agent mouillant.

8. Composition selon l'une des revendications 1 à 7, **caractérisée en ce que** la résine (A) est un polyester insaturé dérivant de l'acide maléique, de son anhydride ou de l'acide fumarique et d'au moins un diol.

9. Composition selon l'une des revendications 1 à 8, **caractérisée en ce que** la charge minérale est du carbonate de calcium.

10. Composition selon la revendication 1, **caractérisée en ce qu'**elle comprend :
(A) de 8 à 30% de polyester insaturé du type maléique ajouté sous forme de solution dans le vinyltoluène (B),
(C) de 4 à 15% d'un copolymère de méthacrylate de méthyle et de styrène, ajouté sous forme de solution dans le vinyltoluène (B),
(D) de 30 à 70% de carbonate de calcium,
(E) de 0,2 à 1% d'un peroxyde organique,
(F) de 5 à 50% de fibres de renforcement, et
(G) de 0,6 à 1,2% d'agent de mouillage.

11. Composition selon l'une des revendications 1 à 10, **caractérisée en ce qu'**elle est homogène.

12. Procédé de préparation d'une composition thermodurcissable selon l'une des revendications 1 à 11, comprenant :
- le cas échéant, une étape de réalisation d'un premier mélange de la charge minérale avec d'éventuels additifs,
- une étape de réalisation d'un second mélange des constituants (A), (B) et (C) et des éventuels autres constituants liquides ou solubles ; et
- une étape d'introduction de la charge minérale ou, le cas échéant du premier mélange, dans le second mélange.

13. Procédé selon la revendication 12, **caractérisé en ce que** le copolymère (C) est mis en oeuvre sous la forme de perles que l'on dissout dans le monomère (B).

14. Procédé selon la revendication 13, **caractérisé en ce que** les perles ont une taille comprise entre 30 et 400 microns et de préférence entre 60 et 200 microns.

15. Objet rigide, obtenu par réticulation d'une composition selon l'une des revendications 1 à 11 ou obtenue par le procédé selon l'une des revendications 12 à 14.

16. Utilisation d'un objet selon la revendication 15 dans les domaines de l'automobile, de l'électricité, de l'électroménager ou du bâtiment.

17. Solution d'un copolymère de méthacrylate de méthyle et de styrène tel que défini dans l'une des revendications 4 à 6 dans le vinyltoluène.

18. Composition thermodurcissable comprenant une solution selon la revendication 17.

19. Utilisation d'une solution selon la revendication 17 dans une composition thermodurcissable.

## Claims

1. A moldable thermosetting composition comprising:
- a polyester resin or vinyl ester epoxy resin (A) in solution in an ethylenically unsaturated liquid monomer (B);
- at least one antishrink additive (C);
- an organic peroxide catalyst; and
- an inorganic filler;
**characterized in that**:
- the ethylenically unsaturated liquid monomer (B) is vinyltoluene and/or t-butylstyrene; and
- the antishrink additive(s) (C) is/are devoid of acid functionality and is/are chosen from copolymers of methyl methacrylate and of a comonomer which is a vinyl monomer and/or methyl acrylate and/or ethyl acrylate, in solution in the ethylenically unsaturated monomer (B).

2. The composition as claimed in claim 1, **characterized in that** the ethylenically unsaturated monomer (B) is vinyltoluene.

3. The composition as claimed in claim 1 or claim 2, **characterized in that** polyester resin or vinyl ester epoxy resin (A) is in solution in vinyltoluene in a proportion of 10 to 70% and preferably of 20 to 65% by weight.

4. The composition as claimed in one of claims 1 to 3, **characterized in that** copolymer (C) is a copolymer of methyl methacrylate and of styrene.

5. The composition as claimed in claim 4, **characterized in that** copolymer (C) is a copolymer of methyl methacrylate and of styrene containing from 20 to 60% and preferably from 40 to 50% by weight of styrene.

6. The composition as claimed in claim 4 or in claim 5,**characterized in that** copolymer of methyl methacrylate and of styrene exhibits a weight-average molar mass of between 50,000 and 500,000 g/mol.

7. The composition as claimed in one of claims 1 to 6, **characterized in that** it additionally comprises a wetting agent.

8. The composition as claimed in one of claims 1 to 7, **characterized in that** resin (A) is an unsaturated polyester deriving from maleic acid, from its anhydride or from fumaric acid and from at least one diol.

9. The composition as claimed in one of claims 1 to 8, **characterized in that** the inorganic filler is calcium carbonate.

10. The composition as claimed in claim 1, **characterized in that** it comprises:
(A) from 8 to 30% of unsaturated polyester of the maleic type, added in the form of solution in vinyltoluene (B),
(C) from 4 to 15% of a copolymer of methyl methacrylate and of styrene, added in the form of a solution in vinyltoluene (B),
(D) from 30 to 70% of calcium carbonate,
(E) from 0.2 to 1 % of an organic peroxide,
(F) from 5 to 50% of reinforcing fibers, and
(G) from 0.6 to 1.2% of wetting agent.

11. The composition as claimed in one of claims 1 to 10, **characterized in that** it is homogeneous.

12. A process for the preparation of a thermosetting composition as claimed in one of claims 1 to 11, comprising:
- if appropriate, a stage of producing a first blend of the inorganic filler with optional additives,
- a stage of producing a second blend of the constituents (A), (B) and (C) and of the other optional liquid or soluble constituents, and
- a stage of introducing the inorganic filler or, if appropriate, the first blend into the second blend.

13. The process as claimed in claim 12, **characterized in that** copolymer (C) is employed in the form of beads which are dissolved in monomer (B).

14. The process as claimed in claim 13, **characterized in that** the beads have a size of between 30 and 400 microns and preferably between 60 and 200 microns.

15. A rigid item, obtained by crosslinking a composition as claimed in one of claims 1 to 11 or obtained by the process as claimed in one of claims 12 to 14.

16. The use of an item as claimed in claim 15 in the fields of the automotive industry, of electricity, of domestic electrical appliances or of construction.

17. A solution of a copolymer of methyl methacrylate and of styrene as defined in one of claims 4 to 6 in vinyltoluene.

18. A thermosetting composition comprising a solution as claimed in claim 17.

19. The use of a solution as claimed in claim 17 in a thermosetting composition.

## Patentansprüche

1. Wärmehärtbare formbare Zusammensetzung aufweisend:
- ein Polyesterharz oder Epoxy-vinylesterharz (A) in Lösung in einem flüssigen Monomer mit ethylenischer Ungesättigtheit (B);
- mindestens einen Zusatz gegen Schrumpfen (C);
- einen organischen Peroxid-Katalysator; und
- mineralischen Füllstoff;
**dadurch gekennzeichnet, dass**:
- das flüssige Monomer mit ethylenischer Ungesättigtheit (B) ein Vinyltoluol und/oder ein t-Butylstyrol ist; und
- der Zusatz oder die Zusätze gegen Schrumpfen (C) eine Säure-Funktionalität hat (haben) und ausgewählt ist (sind) aus den Copolymeren von Methyl-methacrylat und einem Comonomer, das ein Vinyl-Monomer ist, und/oder von Methylacrylat und/oder von Ethylacrylat, in Lösung in dem Monomer mit ethylenischer Ungesättigtheit (B).

2. Zusammensetzung nach Anspruch 1, **dadurch gekennzeichnet, dass** das Monomer mit ethylenischer Ungesättigtheit (B) ein Vinyltoluol ist.

3. Zusammensetzung nach Anspruch 1 oder Anspruch 2, **dadurch gekennzeichnet, dass** das Polyesterharz oder Epoxy-vinylesterharz (A) in einer Menge von 10 bis 70 Gew.%, und bevorzugt von 20 bis 65 Gew.%, in dem Vinyltoluol in Lösung ist.

4. Zusammensetzung nach einem der Ansprüche 1 bis 3, **dadurch gekennzeichnet, dass** das Copolymer (C) ein Copolymer von Methyl-methacrylat und Styrol ist.

5. Zusammensetzung nach Anspruch 4, **dadurch gekennzeichnet, dass** das Copolymer (C) ein Copolymer von Methyl-methacrylat und Styrol ist, das 20 bis 60 Gew.%, und bevorzugt 40 bis 50 Gew.%, Styrol enthält.

6. Zusammensetzung nach Anspruch 4 oder Anspruch 5, **dadurch gekennzeichnet, dass** das Copolymer von Methyl-methacrylat und Styrol eine massegemittelte Molekülmasse zwischen 50.000 und 500.000 g/mol aufweist.

7. Zusammensetzung nach einem der Ansprüche 1 bis 6, **dadurch gekennzeichnet, dass** sie außerdem ein Netzmittel aufweist.

8. Zusammensetzung nach einem der Ansprüche 1 bis 7, **dadurch gekennzeichnet, dass** das Harz (A) ein ungesättigter Polyester ist, der von Maleinsäure, ihrem Anhydrid oder von Fumarsäure und mindestens einem Diol abgeleitet ist.

9. Zusammensetzung nach einem der Ansprüche 1 bis 8, **dadurch gekennzeichnet, dass** der mineralische Füllstoff Calciumcarbonat ist.

10. Zusammensetzung nach Anspruch 1, **dadurch gekennzeichnet, dass** sie aufweist:
(A) von 8 bis 30% ungesättigten Polyester vom Malein-Typ, dem Vinyltoluol (B) in Form einer Lösung beigemischt,
(C) von 4 bis 15% eines Copolymers von Methyl-methacrylat und Styrol, dem Vinyltoluol (B) in Form einer Lösung beigemischt,
(D) von 30 bis 70% Calciumcarbonat,
(E) von 0,2 bis 1 % eines organischen Peroxids,
(F) von 5 bis 50% Verstärkungsfasern, und
(G) von 0,6 bis 1,2% eines Netzmittels.

11. Zusammensetzung nach einem der Ansprüche 1 bis 10, **dadurch gekennzeichnet, dass** sie homogen ist.

12. Verfahren zur Herstellung einer wärmehärtbaren Zusammensetzung gemäß einem der Ansprüche 1 bis 11, aufweisend:
- gegebenenfalls einen Schritt zur Bereitung eines ersten Gemisches des mineralischen Füllstoffs mit etwaigen Zusätzen,
- einen Schritt zur Bereitung eines zweiten Gemisches der Bestandteile (A), (B) und (C) und etwaiger anderer flüssiger oder löslicher Bestandteile; und
- einen Schritt des Einbringens des mineralischen Füllstoffs oder gegebenenfalls des ersten Gemisches in das zweite Gemisch.

13. Verfahren nach Anspruch 12, **dadurch gekennzeichnet, dass** das Copolymer (C) in Form von Perlen eingesetzt wird, die man in dem Monomer (B) löst.

14. Verfahren nach Anspruch 13, **dadurch gekennzeichnet, dass** die Perlen eine Größe zwischen 30 und 400 µm, und bevorzugt zwischen 60 und 200 µm, haben.

15. Harter Gegenstand, erhalten durch Vernetzung einer Zusammensetzung gemäß einem der Ansprüche 1 bis 11 oder erhalten durch das Verfahren gemäß einem der Ansprüche 12 bis 14.

16. Verwendung eines Gegenstands gemäß Anspruch 15 auf den Gebieten der Kraftfahrzeuge, der Elektrizität, der Elektrogeräte oder der Bauwerke.

17. Lösung eines Copolymers von Methyl-methacrylat und Styrol, wie in einem der Ansprüche 4 bis 6 definiert, in Vinyltoluol.

18. Wärmehärtbare Zusammensetzung aufweisend eine Lösung gemäß Anspruch 17.

19. Verwendung einer Lösung gemäß Anspruch 17 in einer wärmehärtbaren Zusammensetzung.
